Europäisches Patentamt

European Patent Office

Office européen des brevets

(11) Publication number: **0 254 419 B1**

# EUROPEAN PATENT SPECIFICATION

(45) Date of publication of patent specification: **04.03.92**   (51) Int. Cl.⁵: **A01N  37/46**

(21) Application number: **87305464.7**

(22) Date of filing: **19.06.87**

(54) **An agent for preventing plant virus diseases.**

(30) Priority: **24.06.86 JP 146004/86**

(43) Date of publication of application:
**27.01.88 Bulletin  88/04**

(45) Publication of the grant of the patent:
**04.03.92 Bulletin  92/10**

(84) Designated Contracting States:
**DE FR GB**

(56) References cited:

CHEMICAL ABSTRACTS, vol. 86, no. 3, 17 January 1977, Columbus, OH (US); E.TYIHAK et al., p. 65, no. 12233s

BIOLOGICAL ABSTRACTS, vol. 73, no. 1, 1982, Biosciences Information Service, Philadelphia, PA (US); S.KAJITA et al., p. 565, no. 5442

CHEMICAL PATENTS INDEX, Basid Abstracts Journal, Section C, week X/33, 1976, no. 62633x, Derwent Publications Ltd, London (GB)

(73) Proprietor: **CHISSO CORPORATION
6-32, Nakanoshima 3-chome Kita-ku
Osaka-shi Osaka 530(JP)**

(72) Inventor: **Fujii, Masahiro
501, 9-8, Oomori Nishi 4-chome
Oota-ku Tokyo(JP)**
Inventor: **Morita, Hiroshi
401, 10-1, Seto Kanazawa-ku
Yokohama-shi Kanagawa-ken(JP)**
Inventor: **Hiraki, Jun
10-2, Otsutomo-cho Kanazawa-ku
Yokohama-shi Kanagawa-ken(JP)**
Inventor: **Hatakeyama, Masakazu
6-1, Chikuji Minamata-shi
Kumamoto-ken(JP)**

(74) Representative: **Ackroyd, Robert et al
W.P. THOMPSON & CO. Eastcheap House
Central Approach
Letchworth, Hertfordshire SG6 3DS(GB)**

EP 0 254 419 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to an agent for preventing plant virus diseases.

Usually, when a plant is infected with a virus disease, the whole plant is infected and dies readily. Also, the infected plant communicates the disease to other healthy plants one after the other, by contact or entomophilous contagion, and as a result a great deal of damage is done to the plants, before the plants are cropped or removed. Examples of viruses of these plant pathogens include the tobacco mosaic viruses (abbreviated as TMV), which infect the eggplant family, the potato viruses (abbreviated as PVX) and the cucumber mosaic viruses (abbreviated as CMV), which infect the eggplant, cucumber and rape families.

Methods which have been tried, for preventing these virus diseases include, for example, for entomophilous infection, such as the cucumber mosaic diseases caused by CMV, extermination of intermediate insects, change of seeding time to avoid the insect generating time, cultivation of specially bred plants and so on. However, these methods are insufficient to obtain a good control effect. For preventing the spread of virus diseases, infected plants have been pulled out. However, it is difficult to prevent poisonous insects flying in from other fields, so that this attempt at prevention is not effective.

On the other hand, TMV diseases, which do not infect by entomophily, but by contact contagion, infect crops at work by contact of the viruses with agricultural machines or by mixing the viruses into the soil. For preventing these diseases, agricultural machines, the soil, working clothes, fingers, etc. are subjected to disinfection at a high cost and involve expensive labour. However, such methods are insufficient to prevent these virus diseases from occurring.

Furthermore, TMV having a weakened poison effect has been tried recently for preventing TMV-tomato. However, there is no guarantee that this type of TMV acts effectively on other kinds of crops. On the contrary, there is the possibility that a tomato which has been contacted with the virus may form a contagion source and that viruses having a strengthened poison effect are mixed with viruses having the weakened poison effect, when many tomato seedlings are inoculated with the latter virus. For these reasons, no viruses having a weakened poison effect have come into wide use.

As described above, physical elimination or agronomic control are only considered as a counterplan for preventing plant virus diseases under existing circumstances. However, the control effect is small and extensive damage is done to crops by plant virus diseases. Accordingly, the prevention of plant virus diseases is an important subject for agriculture.

For research purposes into prevention agents for plant virus diseases, many antiviral activates prepared from many natural products or synthetic compounds have been investigated. As a result, some materials having antiviral activity have been found. Firstly, as a so-called multiplication control agent which controls virus multiplication in plant bodies, materials similar to nucleic acids such as 2-thiouracil, 8-azaguanine, 5-fluorouracil, etc. have been found. However, some of these materials generate mutants and inhibit protein metabolism in the hosts and give rise to damages. These materials are generally expensive and have little actual control effect in the field, so that these materials are not used in practice.

As an agent for blocking contact contagion, sodium alginate is used. However, its application is limited to the TMV-OM and the control effect is insufficient. The agent is ineffective with an entomophilous contagion virus such as CMV, which is carried by plant lice such as aphids.

As a result of an investigation into agents which reduce or eliminate the above problems and have good safety and preventive effects, the present inventors have found that polylysine has the effect of preventing plant virus diseases and have based the present invention upon this discovery.

The present invention provides an agent for preventing plant virus diseases, wherein the agent contains ε-polylysine as an active component.

The ε-polylysine used in the present invention is a polymer of lysine. Lysine is an essential amino acid having two amino groups in the molecule. Polylysine prepared from lysine comprises two types: α-polylysine, which is obtained by condensation of α-amino groups and carboxyl groups, and ε-polylysine, which is obtained by condensation of ε-amino groups and carboxyl groups.

α-polylysine has already been reported as having activity against tobacco mosaic virus disease : see Chemical Abstracts, vol 86, no 3, page 65, no 12233s (17 January 1977) and Biological Abstracts, vol 73, no 1, page 565, no 5442 (1982).

When polylysine is synthesized by a chemical method, α-polylysine is usually obtained. The HBr salt of α-polylysine is commercially available as a reagent, e.g. from SIGMA Chemical Company, USA. ε-polylysine can be prepared by zymotechnics, for instance. In this method, ε-polylysine is obtained by incubation of a certain kind of micro-organism belonging to the Streptomyces genus under aerobic conditions (Japanese Patent Publication No. 59-20359). For instance, No. 346-D strain (Deposit No. 3834 of microorganisms of FRI), Streptomyces albulus subsp. lysinopolymerus, which belongs to the Streptomyces genus and is a polylysine-producing actinomycetes, is incubated on culture medium. $\epsilon$-Polylysine can be obtained by separating and collecting from the resulting cultures. Naturally, the methods for producing polylysine which are used in the present invention are not limited at all.

Table 1

| Effect of polylysine for preventing infection | | |
|---|---|---|
| Polylysine Concentration | Rate of Prevention of Infection (TMV) | |
| | $\alpha$-Polylysine hydrobromide | $\epsilon$-Polylysine hydrochloride |
| 200 ppm | 90% | 100% |
| 100 ppm | 65% | 91% |
| 50 ppm | 47% | 67% |
| 25 ppm | 33% | 49% |

In this test, liquids having various concentrations of $\alpha$-polylysine hydrobromide (for comparison purposes) and $\epsilon$-polylysine hydrochloride were prepared and the same amount of TMV (2 $\mu$g/ml) was mixed into each liquid, then each mixture was inoculated into Samson NN tobacco by the Carborundum method and local lesions were counted. The concentrations of each polylysine are represented by the concentrations of free polylysine. As a control, an equivalent mixture of distilled water and virus was used.

The inhibition rates of infection were calculated by the following equation.

$$\text{Infection inhibition rate} = \frac{C-T}{T} \times 100\%$$

C: the number of local lesions in a control area
T: the number of local lesions in a test area

As $\epsilon$-polylysine has a free amino acid in its constituent molecule, it can be used in the free form. Usually, it can be used as salts of inorganic or organic acids. $\epsilon$-Polylysine is frequently obtained in the form of a hydrochloride or it can be obtained in the free form. Any form of a salt of an inorganic acid, such as the hydrochloride or sulphate, and any salt of an organic acid such as the propionate or palmitate, can be used in carrying out the present invention.

As regards the preventive effects of $\epsilon$-polylysine on the virus, the obstruction effect upon virus multiplication can be exemplified, in addition to the inhibition effect of infection as shown in Table 1. Namely, various initial concentrations of $\epsilon$-polylysine hydrochloride were put into a petri dish (diameter 9 cm, liquid volume 20 ml), after TMV (2 $\mu$g/ml) and PVX (10 $\mu$g/ml) were inoculated into a leaf the day before, discs of 2 cm diameter were punched with a cork borer from the leaf infected by the virus, and the discs were floated on the petri dish. The virus was incubated under natural light at room temperature for three days, then the discs were thoroughly washed with water and ground in a mortar containing ten times the volume of 1% $K_2HPO_4$. The resultant liquid of TMV was inoculated into Samsun NN tobacco and the resultant liquid of PVX was inoculated into xanthine tobacco and then the local lesions were tested. The results are shown in Table 2. As a control, discs of the infected leaf were floated on distilled water.

Table 2

| Obstruction effect upon virus multiplication | | |
|---|---|---|
| $\epsilon$-Polylysine concentration* | TMV | PVX |
| 200 ppm | 46% | 61% |
| 100 ppm | 44% | 63% |
| 50 ppm | 6% | 39% |
| 25 ppm | 0% | 15% |

* These concentrations are based of the free $\epsilon$-polylysine concentration.

Thus, when the concentration of $\epsilon$-polylysine is above 100 ppm, the obstruction effect shown is around 50%.

Methods for preventing plant virus diseases by using $\epsilon$-polylysine according to this invention are as follows.

(1) 10 to 500 ppm of aqueous solutions of $\epsilon$-polylysine and sprayed or applied on plants to be prevented.

(2) While working by polling the tops, nipping out buds, binding props etc., workers disinfect agricultural tools such as shears and their fingers using 100-500 ppm of aqueous $\epsilon$-polylysine solution, whenever they treat a few crops.

(3) Before sowing is carried out, seeds are dipped into a 100-500 ppm of $\epsilon$-polylysine solution for a definite time.

Especially for contagious viruses, before agricultural work such as polling the tops, nipping out buds, binding props, inducing etc., it is effective to spray an aqueous $\epsilon$-polylysine solution on every desired plant.

As virus diseases which can be prevented by using the $\epsilon$-polylysine of the present invention as a preventing agent, in addition to the above TMV, PVX, etc., CMV (cucumber mosaic virus), WMV (pumpkin mosaic virus), TuMV (turnip mosaic virus) and CaMV (cauliflower mosaic virus) can be mentioned by way of example.

When the plant virus diseases caused by these viruses are controlled, the preventive effect can be enhanced by

(1) simultaneous use of a spreader for an agricultural medicament and the preventing agent of this invention, or

(2) simultaneous use of a preventing agent for plant lice, such as aphids, and the preventing agent of the present invention. The simultaneous use or preparation can exceed the simple use of the $\epsilon$-polylysine of this invention in its preventive effect.

When the $\epsilon$-polylysine of the present invention is used as a preventing agent for plant virus diseases, its main advantage is enhanced safety and the heightened preventive effect obtained. When $\epsilon$-polylysine hydrochloride, which is used in the present invention, is administered orally to mice, the acute toxicity $LD_{50}$ is above 5g/kg. Furthermore, the $\epsilon$-polylysine of this invention is normal in mutagenesis tests with microorganisms, the primary test of skin stimulus with rabbits and in the primary test of eye mucosa stimulus.

The effects of the present invention are as follows.

As described above, the preventing agent for plant virus diseases of the present invention, in which $\epsilon$-polylysine is used, shows a better preventive effect than that of conventional preventing agents, so that the virus damage of useful plants can be prevented. Efficiency can also be heightened while carrying out agricultural work. Thus, the agent of the present invention can produce practical results.

The following non-limitative examples illustrate this invention more specifically.

Example 1 (comparison)

$\alpha$-polylysine-hydrobromide aqueous solution, which was adjusted to a concentration of 200 ppm based on $\alpha$-polylysine, was sprayed on every leaf of a potted tobacco seedling (Samsun NN breed) at the period of 12 leaves. Thirty minutes after spraying, previously prepared TMV (1 $\mu$g/ml) was inoculated into the sap of the leaves with carborundum in the usual way.

Four days after the inoculation, local lesions were examined and the infection inhibition rates for TMV were calculated in accordance with the method described in relation to Table 1.

As a control agent, 5000 ppm of sodium alginate in aqueous solution was used.

Five roots per group were used in a test and the test was repeated twice. The test results are shown in Table 3.

Table 3

| Agent Used | Concentration (ppm) | Infection Inhibition Rate (%) | Medical Damage |
|---|---|---|---|
| $\alpha$-polylysine hydrobromide | 200* | 86 | Nothing |
| Control agent (Sodium alginate) | 5000 | 55 | Nothing |
| Non-treatment | - | 0 | Nothing |

* Concentration based on $\alpha$-polylysine.

4

Example 2.

200 mg of ε-polylysine and 100 mg of sodium lauryl sulphate were homogeneously made up to 1 litre with water (aqueous solution of 200 ppm of ε-polylysine).

The aqueous solution prepared as described above was sprayed on every leaf of a potted tobacco (xanth-NC breed) seedling at the period of 10 leaves. One hour after spraying, previously prepared PVX (5 μg/ml) was inoculated into the sap of leaves with carborundum in the usual way. Four days after the inoculation, local lesions were examined and the infection inhibition rates for PVX were calculated in accordance with the method of Example 1.

Five roots per group were used in a test and the test was repeated twice. The test results are shown in Table 4.

Table 4

| Agent Used | Concentration (ppm) | Infection Inhibition Rate (%) | Medical Damage |
|---|---|---|---|
| ε-Polylysine aqueous soln. | 200 * | 99 | Nothing |
| Non-treatment | - | | Nothing |

* Concentration based on ε-polylysine.

Example 3.

200 mg of ε-polylysine and 200 mg of xanthan gum were homogeneously made up to 1 litre with water (aqueous solution of 200 ppm of ε-polylysine). The above-mentioned ε-polylysine aqueous solution was sprayed at the rate of 15 ml per pot on every seed leaf of a potted cucumber seedling, five days after it germinated. One hour after spraying, CMV was inoculated into the sap of leaves with carborundum in the usual way. Fourteen days after the inoculation, the number of roots have mosaic-lesions which appeared on the cucumber seedling were examined and the infection inhibition rates (%) were calculated in accordance with the following formula.

Ten roots per area were used in a test at a hothouse and the test was repeated twice.

$$\text{Infection inhibition rate} = \frac{C-T}{C} \times 100\%$$

C: the number of mosaic-lesions of a non-treated area
T: the number of mosaic-lesions of a treated area
The results are shown in Table 5.

Table 5

| Agent Used | Concentration (ppm) | Infection Inhibition Rate (%) | Medical Damage |
|---|---|---|---|
| ε-Polylysine aqueous soln. | 200 * | 100 | Nothing |
| Non-treatment | - | 0 | Nothing |

* Concentration based on ε-polylysine.

Example 4.

Pimentos were cultivated and over-wintered in a house where pimentos had caught tobacco mosaic disease at the last planting. The pimentos had been set out at the beginning of October in the house. ε-Polylysine hydrochloride aqueous solution (250 ppm based on ε-polylysine) was repeatedly sprinkled on the

5

pimentos in the proportion of 20 litre per area every seven days from one week after the pimentos had been set out. After sprinkling the solution, inducement work was conducted and the pimentos were harvested by a plucking method. The solution was sprinkled 20 times up to March. The generating rate of disease roots was finally 36%. On the contrary, the generating rate of disease roots was 100% at at a non-sprinkled area. The harvesting rate of the area was sprinkled with $\epsilon$-polylysine hydrochloride increased by 32% in comparison with the non-sprinkled area.

The results are shown in Table 6.

Table 6

| Test Area | Generating rate of disease roots | Harvest** (kg) | Medical damage |
|---|---|---|---|
| $\epsilon$-Polylysine hydrochloride-sprinkled area* | 36 | 5.55 | Nothing |
| Non-sprinkled area | 100 | 4.19 | Nothing |

\* Concentration is 250 ppm based on $\epsilon$-polylysine in aqueous solution.
\** Harvest of one area per seven roots.

Example 5.

The test was conducted under the same conditions as in Example 1 except that $\epsilon$-polylysine acetate was used in the place of $\alpha$-polylysine hydrobromide.

Four days after the inoculation, local lesions were examined and the infection inhibition rates for TMV were calculated in accordance with the method described in Table 1. As a control agent, 5000 ppm of sodium alginate were used in a test and the test was repeated twice.

The test results are shown in Table 7.

Table 7

| Used Agent | Concentration (ppm) | Infection Inhibition Rate (%) | Medical Damage |
|---|---|---|---|
| $\epsilon$-Polylysine acetate | 200* | 95 | Nothing |
| Control agent (Sodium alginate) | 5000 | 55 | Nothing |
| Non-treatment | - | 0 | Nothing |

\* Concentration based on $\epsilon$-polylysine.

## Claims

1. An agent for preventing plant virus diseases, characterised in that the active component of the agent is $\epsilon$-polylysine.

2. An agent as claimed in claim 1, wherein the amount of $\epsilon$-polylysine present is equivalent to a rate of use of 10-10,000 ppm.

3. An agent as claimed in claim 1 or 2, wherein the $\epsilon$-polylysine is present in the form of a salt of an organic acid or an inorganic acid.

4. A method of propagating plants subject to a plant virus disease, which comprises applying to the plants or to tools or the hands as a disinfectant or to seeds prior to sowing an agent comprising $\epsilon$-polylysine.

## Revendications

1. Agent de prévention contre les maladies à virus des végétaux, caractérisé en ce que le composant actif de l'agent est l'ε-polylysine.

2. Agent selon la revendication 1, dans lequel la quantité d'ε-polylysine présente est équivalente à un taux d'utilisation de 10-10 000 ppm.

3. Agent selon le revendication 1 ou 2, dans lequel l'ε-polylysine est présente sous forme d'un sel d'un acide organique ou d'un acide inorganique.

4. Procédé pour faire se reproduire des végétaux sujets à une maladie à virus des végétaux, qui consiste à appliquer un agent comprenant de l'ε-polylysine aux végétaux ou aux outils ou aux mains, en tant que désinfectant, ou aux graines avant de semer.

**Patentansprüche**

1. Mittel zur Vorbeugung gegen Planzenviruskrankheiten, **dadurch gekennzeichnet,**
daß die aktive Komponente des Mittels ε-Polylysin ist.

2. Mittel nach Anspruch 1, worin die vorhandene ε-Polylysin-Menge einer Verwendungsrate von 10-10.000 ppm entspricht.

3. Mittel nach Anspruch 1 oder 2, worin das ε-Polylysin in Form eines Salzes einer organischen Säure oder einer anorganischen Säure vorliegt.

4. Verfahren zur Vermehrung von Pflanzen, die einer Pflanzenviruskrankheit ausgesetzt sind, welches das Aufbringen eines ε-Polylysin umfassenden Mittels als Desinfektionsmittel auf die Pflanzen oder auf Werkzeuge oder die Hände oder auf Saat vor dem Aussäen umfaßt.